# EUROPEAN PATENT SPECIFICATION

(11) **EP 3 623 285 B1**
(45) Date of publication and mention of the grant of the patent: **31.08.2022**
(21) Application number: 19188395.8
(22) Date of filing: 25.07.2019
(51) Int. Cl.: B64C 11/00, B64C 11/48, B64D 27/02, B64D 27/24, B64D 35/04, B64D 35/06, F02K 3/04

(54) **TURBOMACHINE**
TURBOMASCHINE
TURBOMACHINE

(30) Priority: 22.08.2018 GB 201813675
(43) Date of publication of application: 18.03.2020
(73) Proprietor: Rolls-Royce plc, London N1 9FX (GB)
(72) Inventor: Harvey, Giles, Derby, Derbyshire DE24 8BJ (GB)
(74) Representative: Rolls-Royce plc

(56) References cited:
- CN-A- 107 054 597
- GB-A- 1 321 657
- GB-A- 2 541 932
- US-A- 2 270 615
- US-A- 3 867 813
- US-A1- 2009 245 998
- US-A1- 2011 030 336
- US-A1- 2014 030 060
- US-B1- 6 209 311

## Description

### TECHNICAL FIELD

This disclosure relates to turbomachinery for producing thrust to propel an aircraft.

### BACKGROUND

Turbomachines transfer energy between a rotor and a fluid. They may be used for aircraft propulsion by developing thrust. The range and cost of operating an aircraft is largely dependent upon the efficiency of its engines. As energy sources become more scarce, it is desirable to increase the propulsive efficiency of the propulsive turbomachinery. It is also desirable to employ electric machines to drive the turbomachines to reduce the thermal losses and emissions associated with internal combustion engines.

US patent application US20140030060 describes a gas turbine engine which comprises a fan section including a fan hub supporting a plurality of fan blades for rotation relative to a fan case, a shaft rotatable relative to the fan case about an engine centre axis, and a geared architecture driven by the shaft to provide driving output to rotate the fan hub. A compressor is positioned forward of the geared architecture and radially inward of the fan blades, with the compressor being driven by the shaft.

US patent application US20090245998 discloses a fluid flow machine includes at least one casing 1 and at least one rotor drum 3 rotatable about a machine axis 4, with stator vanes 8 and rotor blades 7 being arranged in an annulus duct 2 formed between the casing 1 and the rotor drum 3 The annulus duct 2 is divided into an outer annular duct 5 and an inner annular duct 6 by at least one annular flow divider 11, in each of which rotor blades 7 and stator vanes 8 are arranged.

Outer rotor blades 7a, which are arranged in the outer annular duct 5, are rotatable at a different speed than the inner rotor blades 7b, which are arranged in the inner annular duct 6.

GB patent application GB2541932 describes a gas turbine comprising a combustion stage, a turbine stage comprising a generator generating electrical energy in response to rotation of a turbine and a compression stage comprising an electrical motor using the energy to rotate a compressor. The compressor/turbine is controlled to rotate at different speeds and arranged about different independent axes, without a mechanical connection via a spool. An electrical energy store harvests the energy and selectively supply the motor. The motor and/or generator may be mounted onto a solid mechanical shaft, or comprise a rotor forming part of a rotatable compressor/turbine element and a stator comprising a ring around the element, or comprise a rotor forming part of a compressor/turbine hollow shaft rotatable about a stator forming part of a hub with a hollow hub interior. A concentric fan surrounds the compressor. An axial through-flow path through an interior of the compressor/turbine may comprise an additional combustion stage and/or rocket combustion stage.

Chinese patent application CN107054597 discloses a coaxial different-direction dual-propeller device. The device comprises an annular motor and a motor of a common structure. The extending lines of rotary shafts of the two motors are overlapped. The annular motor comprises a hollow annular motor stator, a plurality of coils are evenly wound on the outer wall of the motor stator, and the inner wall of the motor stator is fixedly connected with an outer ring of a bearing. The motor stator is composed of two mutually-embedded-fit cylindrical structures and an annular structure. The internal cylindrical structure penetrates through the centre of the bearing and is fixedly connected with the inner ring of the bearing, and the motor stator is sleeved with the external cylindrical structure, magnetic sheets are laid on the inner wall of the external cylindrical structure, and the motor stator and a motor rotor are of a symmetrical structure. The symmetry axes of the motor stator and the motor rotor are overlapped. The rotary shaft of the motor of the common structure penetrates through an internal cylindrical structure of the motor rotor and the centre of the bearing. The bottom of an annular structure of the motor rotor is fixedly connected with a first propeller, and the rotary shaft of the motor of the common structure is fixedly connected with a second propeller.

US patent application US20110030336 discloses a co-annular ducted fan in which secondary air flow is provided for a ducted fan having an engine core driving a fan blisk. The fan blisk incorporates a set of thrust fan blades extending from an outer hub and a set of integral secondary flow blades extending intermediate an inner hub and the outer hub. A nacelle provides a first flow duct for the thrust fan blades and a secondary flow duct carries flow from the integral secondary flow blades.

US patent US3867813 discloses a turbojet engine arrangement which includes a low-pressure turbine arranged downstream of the exhaust gas stream of the basic engine which is connected to a low pressure compressor arranged upstream of the forward most compressor of the basic engine. Control flaps are provided in the exhaust gas stream for selectively directing the basic engine exhaust gas stream to and away from the low pressure turbine. At least a portion of the air outlet of the low pressure compressor is directed to said deflector devices for amplifying thrust and lift when the exhaust gas stream is in communication with the low pressure turbine. In order to minimize disruption of inlet air to the basic engine, the low pressure compressor blades are pivotable into a neutral position, or alternatively are arranged outwardly of the inlet to the basic engine at the ends of non-flow disrupting radially extending spokes.

GB patent application GB1321657 discloses a by-pass type gas turbine jet engine which comprises compressor means, combustion chamber and turbine means, a first fan disposed upstream of the combustion chamber, a second fan, disposed downstream of the combustion chamber, an inner by-pass passage which extends substantially the whole length of the engine, and an outer annular by-pass passage which surrounds at least a portion of the inner passage, the blading of one of the fans extending across only one of the two by-pass passages, the blading of the other fan extending across both of the passages. The engine comprises an inner by-pass passage and an outer by-pass passage which is disposed around the upstream end of the inner by-pass passage. A front fan extends across both by-pass passages while a rear fan extends across the inner by-pass passage only. The two fans are driven by an LP turbine, the front fan being driven through shaft and the rear fan being mounted at the tips of the LP turbine blades.

US patent US6209311 discloses an impeller is directly driven by an output shaft of a core engine. The airflow produced by the impeller rotates an air turbine and a fan disposed integrally with the air turbine. The impeller and the air turbine form a fluid coupling which serves also as a speed reducing mechanism. The rotational speed of the fan can be reduced to be lower than that of the output shaft while retaining efficiency of the core engine. The outer diameter of the fan can be increased, raising a bypass ratio.

US patent US2270615 discloses a propeller having a hub with blades extending therefrom, and a relatively narrow ring concentric with the hub and attached to the outer ends of the blades with the rear edge of the ring flush with the trailing edges of the blades, and with the width of the ring extended to the leading edges of the blades on the pressure sides of the blades forming pockets on the said pressure sides for holding fluids preventing the free scape of fluids from the ends of the blades on the pressure surfaces thereof, and characterised in that the width of the ring is materially reduced behind and between the blades providing free and unobstructed scape of fluids from the suction surfaces of the blades.

### SUMMARY

The invention is directed towards axial flow turbomachines for producing thrust to propel an aircraft, and aircraft incorporating the same.

An axial flow turbomachine according to claim 1 is provided, in which the inner fan has, in operation, a rate of rotation of from 3 to 8 times that of the outer fan. This maximises the work of the inner fan whilst minimising tip losses and blade stress. Further embodiments are defined in the dependent claims.

### BRIEF DESCRIPTION OF THE DRAWINGS

Embodiments will now be described by way of example only with reference to the accompanying drawings, which are purely schematic and not to scale, and in which:
Figure 1 shows an aircraft having axial flow turbomachines for producing thrust; and
Figure 2 is a schematic of one of the turbomachines of Figure 1.

### DETAILED DESCRIPTION

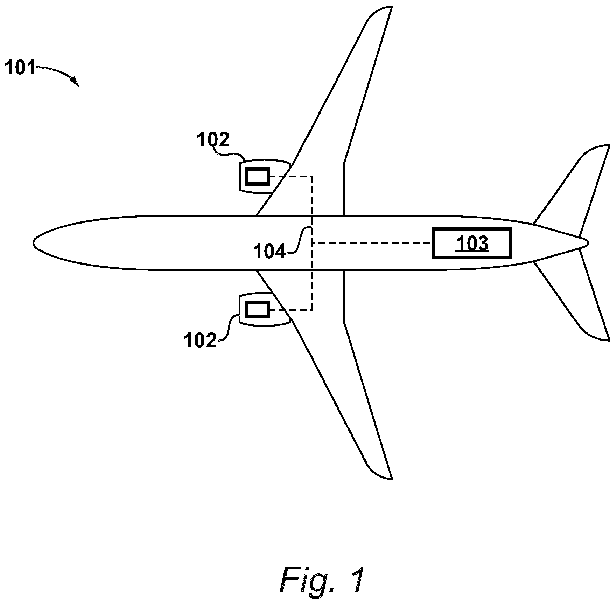

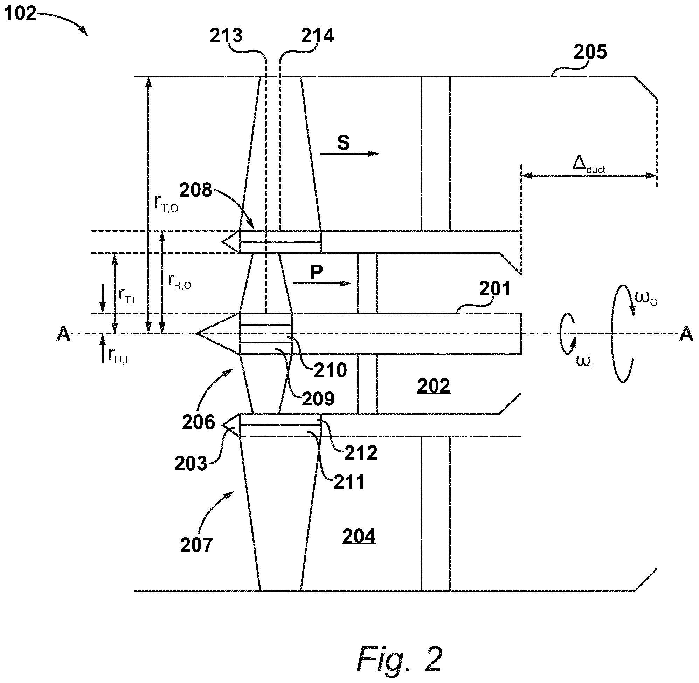

An aircraft 101 is illustrated in Figure 1, and is in the present embodiment a hybrid electric aircraft having two axial flow turbomachines 102 that are electrically-driven. The turbomachines 102 will be described further with reference to Figure 2.

Referring again to Figure 1, electrical power is provided to the turbomachines by an electrical generation unit 103 located in the fuselage via a bus 104. It will be appreciated by those skilled in the art that the bus 104 may include conductors, power electronics, and may possibly include energy storage systems such as batteries or flywheels to provide extra capacity.

In the present embodiment, the electrical generation unit 103 includes an electric machine 201 which is driven by an internal combustion engine. In the present example, the electrical generation unit 103 is configured as a turboelectric generator, in which the internal combustion engine is a gas turbine engine 202, i.e. a Brayton cycle engine. Alternatively, the internal combustion engine could be a piston engine, such as a Diesel cycle engine, or any other type of internal combustion engine, such as those operating in accordance with an Otto or Atkinson cycle.

In an alternative configuration, the aircraft 101 does not include an electrical generation unit 103, but instead includes a battery pack and is hence fully electric.

A schematic of one of the turbomachines 102 is illustrated in Figure 2.

The turbomachine 102 is substantially axisymmetric around its centreline A-A. An inner casing 201 defines the inner radial extent of an inner duct 202, with a flow splitter 203 defining the outer radial extent of the inner duct 202. The flow splitter 203 also defines the inner radial extent of an outer duct 204, with an outer casing 205 defining the outer radial extent of the outer duct 204.

The inner duct 202 and outer duct 204 are thereby annular and concentric with each other with respect to the centreline A-A.

An inner fan 206 is located within the inner duct 202, whilst an outer fan 207 is located within the outer duct 204. In operation, each fan rotates around the centreline A-A. The inner fan 206 produces a primary pressurised flow P, and the outer fan 207 produces a secondary pressurised flow S. Together, the flows P and S produce thrust which propels the aircraft 101. In operation, the primary pressurised flow P and the secondary pressurised flow S exit their respective ducts 202 and 204, whereupon the secondary pressurised flow S substantially shrouds the primary pressurised flow P and reduces the appreciable jet noise of the primary pressurised flow P. This may have particular benefits for vehicles which operate in areas where community noise is of concern.

As illustrated in the Figure, the outer fan 207 has a hollow hub 208 through which the inner duct 202 passes.

In the present embodiment, the outer duct 204 has a greater axial extent than the inner duct 202, such that its trailing edge is located axially downstream of the trailing edge of the inner duct 202. In this way, a mixing zone is created. The difference in duct length Δ_{duct}, may be adjusted to achieve the desired level of mixing between the primary pressurised flow P and the secondary pressurised flow S.

In an embodiment, Δ_{duct} may be from 0 to 14 times the tip radius r_{T,I} of the inner fan 206, i.e. 0 < Δ_{duct} ≤ 14r_{T,I}. In a specific embodiment, 4r_{T,I} < Δ_{duct} ≤ 10R_{T,I}. In another specific embodiment, 6r_{T,I} < Δ_{duct} ≤ 8r_{T,I}. In a another specific embodiment, Δ_{duct} = 7r_{T,I}.

Δ_{duct} may be selected to balance the degree of mixing achieved and the losses due to friction. For a given degree of mixing, a shorter Δ_{duct} may be achieved by using forced mixing techniques, such as by means of a lobed mixer. Thus for example in such a configuration Δ_{duct} may be less than 7 times the tip radius r_{T,I} of the inner fan 206, i.e. 0 < Δ_{duct} ≤ 7r_{T,I}. In a specific embodiment, 2r_{T,I} < Δ_{duct} ≤ 5r_{T,I}. In another specific embodiment, 3r_{T,I} < Δ_{duct} ≤ 4r_{T,I}. In another specific embodiment, Δ_{duct} = 3.5r_{T,I}.

The principle of operation of the turbomachine 102 in this embodiment is therefore similar to that of an ejector. In operation, shear forces between the primary pressurised flow P and secondary pressurised flow S drive a mixing process and a static pressure drop below ambient pressure in the mixing plane.

In a specific embodiment, the inner fan 206 rotates in a direction counter to the direction of rotation of the outer fan 207, i.e. ω̂_{I} = -ω̂_{O}. This may assist the mixing of the primary pressurised flow P and the secondary pressurised flow S.

During the mixing process, energy is transferred between the flows and the kinetic energy of the primary pressurised flow P is distributed over a larger mass flow of air. The specific enthalpies of the two flows P and S equalise and the exhaust velocity decreases. This increases the propulsive efficiency of the turbomachine 102.

In an example which does not fall within the scope of the present claims, the inner duct 202 is may be the same length or longer than the outer duct 204, i.e. Δ_{duct} ≤ 0 and so there is no mixing zone. However, the turbomachine 102 when configured in this way will still exhibit greater thrust than a single fan arrangement having the same pressure ratio and tip speed as the outer fan 207. This is attributable to the greater overall momentum change due to the presence of the inner fan 206.

The outer fan 207 has a swept area Ao of from 2 to 20 times greater than the swept area A_{I} of the inner fan 206, i.e. 2A_{I} ≤ A_{O} ≤ 20A_{I}. This provides a positive thrust gain, i.e. an augmentation factor Φ (which is a measure of the factor of thrust gain achieved versus a single rotor) is greater than 1. In a specific embodiment, the outer fan 207 has a swept area Ao of from 4 to 17 times greater than the swept area A_{I} of the inner fan 206, i.e. 4A_{I} ≤ Ao ≤ 17A_{I}. This may achieve an augmentation factor Φ of from about 1.15 to about 1.45 versus a single fan of the same tip diameter as the outer fan 207. In a specific embodiment, the outer fan 207 has a swept area Ao of from 7.5 to 13 times greater than the swept area A_{I} of the inner fan 206, i.e. 7.5A_{I} ≤ Ao ≤ 13A_{I}. This may achieve an augmentation factor Φ of from about 1.3 to about 1.4 versus a single fan of the same tip diameter as the outer fan 207. In a specific embodiment, the outer fan 207 has a swept area Ao that is 9 times greater than the swept area A_{I} of the inner fan 206, i.e. Ao = 9A_{I}. This may achieve an augmentation factor Φ of about 1.35 versus a single fan of the same tip diameter as the outer fan 207.

In the present embodiment, the inner fan 206 is driven by an electric machine comprising a rotor 209 and a stator 210. In the specific embodiment of Figure 2, the rotor 209 and stator 210 are located within the casing 201. In the specific embodiment, the rotor 209 is an exterior rotor, such that the stator 209 is located radially inward relative to the rotor 210. It may be integral with the hub of the inner fan 206.

In an alternative embodiment, the rotor 209 may be an interior rotor, connected to the hub of the inner fan 206 by an appropriate shaft arrangement. In another alternative embodiment, the inner fan 206 may be rim-driven, with the rotor 209 and stator 210 located in the flow splitter 203. In such a case, the rotor 209 may be an interior rotor.

In the present embodiment, the outer fan 207 is driven by an electric machine comprising a rotor 211 and a stator 212. In the specific embodiment of Figure 2, the rotor 211 and stator 212 are located within the flow splitter 203. In the specific embodiment, the rotor 211 is an exterior rotor, such that the stator 212 is located radially inward relative to the rotor 211 and radially outward of the inner duct 202. It may be integral with the hub of the outer fan 207.

In an alternative embodiment, the rotor 211 may be an interior rotor, connected to the hub of the outer fan 207 by an appropriate shaft arrangement. In another alternative embodiment, the fan 206 may be rim-driven, with the rotor 211 and stator 212 located in the casing 205. In such a case, the rotor 211 may be an interior rotor.

In the present embodiment, the inner fan 206 and outer fan 207 overlap in an axial sense. However, in alternative embodiments, they may instead only partially overlap, or alternatively not at all. In the present embodiment, the inner fan 206 has a mid-chord line 213 axially forward of the mid-chord line 214 of the outer fan 207. Alternatively, the mid-chord lines may be aligned axially, or instead the mid-chord line 213 may be located rearward of the mid-chord line 214.

The hub-tip ratio of the outer fan 207 vo may be determined as the ratio of the hub radius r_{H,O} to the tip radius r_{T,O}. The hub-tip ratio of the inner fan 206 v_{I} may be determined as the ratio of the hub radius r_{H,I} to the tip radius r_{T,I}. The hub-tip ratios may be determined based on the mean hub and tip radii, should the hade angle at the root of the fans be non-zero, and/or the tip conform to a divergent or convergent duct endwall.

In an embodiment, the outer fan 207 has a hub-tip ratio vo of from 1.6 to 2.2 times that of the inner fan 206, v_{I}, i.e. 1.6v_{I} ≤ vo ≤ 2.2v_{I}. This minimises the overall impact of tip clearance on the smaller-diameter inner fan 206. Further, the inner fan 206 may rotate at a rate greater than the rate of the outer fan 207, i.e. |ω_{I}| > |ω_{O}|, due to the reduced blade stresses. In a specific embodiment, the outer fan 207 has a hub-tip ratio vo of from 1.6 to 2.0 times that of the inner fan 206, v_{I}, i.e. 1.6v_{I} ≤ vo ≤ 2.0v_{I}. In another specific embodiment, the outer fan 207 has a hub-tip ratio vo of from 1.6 to 1.8 times that of the inner fan 206, v_{I}, i.e. 1.6v_{I} ≤ vo ≤ 1.8v_{I}. In another specific embodiment, the outer fan 207 has a hub-tip ratio vo that is 1.6 times that of the inner fan 206, v_{I}, i.e. vo = 1.6v_{I}. For example, the outer fan 207 may have a hub-tip ratio vo of 0.4, and the inner fan 206 has a hub-tip ratio v_{I} of 0.25.

In an embodiment, the diameter of the outer fan 207 is from 2.5 to 3.5 times greater than the diameter of the inner fan 206. As will be appreciated this means that the respective radii r_{T,O} and r_{T,I} observe the same relation, i.e. 2.5r_{T,I} ≤ r_{T,O} ≤ 3.5r_{T,I}. This allows sufficient swept area for the outer fan 207 to operate efficiently, but enough space for the electric machine to be housed in the flow splitter. In a specific embodiment, the diameter of the outer fan 207 is from 2.8 to 3.3 times greater than the diameter of the inner fan 206, i.e. 2.8r_{T,I} ≤ r_{T,O} ≤ 3.3r_{T,I}. In another specific embodiment, the diameter of the outer fan 207 is 3.2 times greater than the diameter of the inner fan 206, i.e. r_{T,O} = 3.2r_{T,I}. This allows for an optimum balance to be struck between the size of the electric machine, and the efficiency of the turbomachine. Further, in the present embodiment in which Δ_{duct} is positive, the aforementioned choices of diameters may also optimise the thrust augmentation factor Φ that is obtained.

In an embodiment, the inner fan 206 is configured to operate with a tip speed U_{T,I} that is from 1 to 3 times the tip speed U_{T,O} of the outer fan 207, i.e. U_{T,O} ≤ U_{T,I} ≤ 3U_{T,O}. This allows the inner fan 206 to operate with a higher pressure ratio whilst, due to the shielding provided by the secondary pressurised flow, not causing excessive jet noise. In a specific embodiment, the inner fan 206 is configured to operate with a tip speed U_{T,I} that is from 1.3 to 2.5 times the tip speed U_{T,O} of the outer fan 207, i.e. 1.3U_{T,O} ≤ U_{T,I} ≤ 2.5U_{T,O}. In another specific embodiment, is configured to operate with a tip speed that is 1.9 times that of the outer fan 207, i.e. U_{T,I} = 1.9U_{T,O}.

The inner fan 206 is configured to operate at a rate of rotation ω_{I} that is from 3 to 8 times the rate ω_{O} of the outer fan 207, i.e. 3ω_{O} ≤ ω_{I} ≤ 8ω_{O}. This maximises the work of the inner fan 206 whilst minimising tip losses and blade stress. In a specific embodiment, the inner fan 206 is configured to operate at a rate of rotation ω_{I} that is from 5 to 7 times the rate ω_{O} of the outer fan 207, i.e. 5ω_{O} ≤ ω_{I} ≤ 7ω_{O}. In another specific embodiment, the inner fan 206 is configured to operate at a rate of rotation 6 times that of the outer fan 207, i.e. ω_{I} = 6ω_{O}.

It will be appreciated by those skilled in the art that whilst the present embodiments of the turbomachine 102 have been described with application to a hybrid- or fully-electric aircraft, the same principles may be applied in embodiments in which the requisite shaft power is provided by another means, such as one or more gas turbine engines. Different rotational rates may, for example, be achieved by use of a gearbox. Alternatively, a combination of a gas turbine and an electric machine may be used to drive one or more of the inner and outer fans.

Various examples have been described, each of which feature various combinations of features. It will be appreciated by those skilled in the art that, except where clearly mutually exclusive, any of the features may be employed separately or in combination with any other features and the invention extends to and includes all combinations and subcombinations of one or more features described herein, to the extent that they fall within the scope of the claims.

## Claims

1. An axial flow turbomachine (102) for producing thrust to propel an aircraft, comprising:
an inner duct (202) and an outer duct (204), both of which are annular and concentric with one another;
an inner fan (206) located in the inner duct (202), the inner fan (206) being configured to produce a primary pressurised flow;
an outer fan (207) located in the outer duct (204), the outer fan (207) being configured to produce a secondary pressurised flow and having a hollow hub (208) through which the inner duct (202) passes;
the inner and outer fans (206, 207) each being configured to produce thrust to propel the aircraft;
wherein the inner fan (206) has, in operation, a rate of rotation of from 3 to 8 times that of the outer fan (207); and
wherein in operation, the primary pressurised flow and the secondary pressurised flow exit their respective ducts (204, 206), whereupon the secondary pressurised flow substantially shrouds the primary pressurised flow and a trailing edge of the outer duct is located axially downstream of the inner duct (202) for mixing of the first and secondary pressurised flows.

2. The turbomachine of claim 1, in which the inner fan (206) has, in operation, a rate of rotation of from 5 to 7 times that of the outer fan (207), optionally 6 times that of the outer fan (207).

3. The turbomachine of claim 1, in which the inner fan (206), in operation, rotates counter to the outer fan (207).

4. The turbomachine of claim 1, in which the inner fan (206) and the outer fan (207) are each driven by an electric machine (209, 210, 211, 212).

5. The turbomachine of claim 1, further comprising a first electric (209, 210) machine configured to drive the inner fan (206), the first electric machine (209, 210) having a rotor (209) integral with a hub of the inner fan (206) and a stator (210) located radially inward of the rotor (209).

6. The turbomachine of claim 1, in which a second electric machine (211, 212) is configured to drive the outer fan (207), the second electric machine (211, 212) having a rotor (211) integral with the hub of the outer fan (207) and a stator (212) located radially inward of the rotor (211) and radially outward of the inner duct (202).

7. The turbomachine of claim 1, in which the inner fan (206) and the outer fan (207) partially or fully overlap in an axial direction.

8. The turbomachine of claim 1, in which a hub-tip ratio of the outer fan (207) is from 1.6 to 2.2 times a hub-tip ratio of the inner fan (206), optionally from 1.6 to 2.0 times the hub-tip ratio of the inner fan (206), optionally from 1.6 to 1.8 times the hub-tip ratio of the inner fan (206), and optionally the outer fan (207) has a hub-tip ratio of 0.4 and the inner fan (206) has a hub-tip ratio of 0.25.

9. The turbomachine of claim 1, in which the outer fan (207) has a diameter of from 2.5 to 3.5 times a diameter of the inner fan (206), optionally from 2.8 to 3.3 times a diameter of the inner fan (206).

10. The turbomachine of claim 1, in which the inner fan (206) has, in operation, a tip speed of from 1 to 3 times that of the outer fan (207), optionally from 1.3 to 2.5 times that of the outer fan (207).

11. The turbomachine of claim 1, in which a swept area of the outer fan (207) is from 2 to 20 times greater than a swept area of the inner fan (206), optionally from 7.5 to 13 times greater than a swept area of the inner fan (206).

12. An aircraft comprising one or more turbomachine (201) according to any preceding claim.

## Patentansprüche

1. Axialflussturbomaschine (102) zum Produzieren von Schub, um ein Luftfahrzeug anzutreiben, umfassend:
einen Innenkanal (202) und einen Außenkanal (204), die beide ringförmig und konzentrisch zueinander sind;
ein Innengebläse (206), das sich in dem Innenkanal (202) befindet, wobei das Innengebläse (206) konfiguriert ist, um einen primären Druckfluss zu produzieren;
ein Außengebläse (207), das sich in dem Außenkanal (204) befindet, wobei das Außengebläse (207) konfiguriert ist, um einen sekundären Druckfluss zu produzieren und eine Hohlnabe (208) aufweist, durch die der Innenkanal (202) verläuft;
wobei das Innen- und das Außengebläse (206, 207) jeweils konfiguriert sind, um Schub zu produzieren, um das Luftfahrzeug anzutreiben;
wobei das Innengebläse (206) in Betrieb eine Rotationsrate aufweist, die das 3- bis 8-Fache derjenigen des Außengebläses (207) ist; und
wobei in Betrieb der primäre Druckfluss und der sekundäre Druckfluss ihre jeweiligen Kanäle (204, 206) verlassen, woraufhin der sekundäre Druckfluss den primären Druckfluss im Wesentlichen umhüllt und sich eine Hinterkante des Außenkanals axial stromabwärts des Innenkanals (202) befindet, um den ersten und den sekundären Druckfluss zu mischen.

2. Turbomaschine nach Anspruch 1, wobei das Innengebläse (206) in Betrieb eine Rotationsrate aufweist, die das 5- bis 7-Fache derjenigen des Außengebläses (207) ist, optional das 6-Fache derjenigen des Außengebläses (207).

3. Turbomaschine nach Anspruch 1, wobei das Innengebläse (206) in Betrieb gegen das Außengebläse (207) rotiert.

4. Turbomaschine nach Anspruch 1, wobei das Innengebläse (206) und das Außengebläse (207) jeweils durch eine elektrische Maschine (209, 210, 211,212) angetrieben werden.

5. Turbomaschine nach Anspruch 1, ferner umfassend eine erste elektrische (209, 210) Maschine, die konfiguriert ist, um das Innengebläse (206) anzutreiben, wobei die erste elektrische Maschine (209, 210) einen Rotor (209), der einstückig mit einer Nabe des Innengebläses (206) ist, und einen Stator (210) aufweist, der sich radial innerhalb des Rotors (209) befindet.

6. Turbomaschine nach Anspruch 1, wobei eine zweite elektrische Maschine (211, 212) konfiguriert ist, um das Außengebläse (207) anzutreiben, wobei die zweite elektrische Maschine (211, 212) einen Rotor (211), der einstückig mit der Nabe des Außengebläses (207) ist, und einen Stator (212) aufweist, der sich radial innerhalb des Rotors (211) und radial außerhalb des Innenkanals (202) befindet.

7. Turbomaschine nach Anspruch 1, wobei sich das Innengebläse (206) und das Außengebläse (207) in einer axialen Richtung teilweise oder vollständig überlappen.

8. Turbomaschine nach Anspruch 1, wobei ein Nabe-Spitze-Verhältnis des Außengebläses (207) das 1,6- bis 2,2-Fache eines Nabe-Spitze-Verhältnisses des Innengebläses (206) ist, optional das 1,6- bis 2,0-Fache des Nabe-Spitze-Verhältnisses des Innengebläses (206), optional das 1,6-bis 1,8-Fache des Nabe-Spitze-Verhältnisses des Innengebläses (206), und optional das Außengebläse (207) ein Nabe-Spitze-Verhältnis von 0,4 aufweist und das Innengebläse (206) ein Nabe-Spitze-Verhältnis von 0,25 aufweist.

9. Turbomaschine nach Anspruch 1, wobei das Außengebläse (207) einen Durchmesser des 2,5- bis 3,5-Fachen eines Durchmessers des Innengebläses (206) aufweist, optional des 2,8- bis 3,3-Fachen eines Durchmessers des Innengebläses (206).

10. Turbomaschine nach Anspruch 1, wobei das Innengebläse (206) in Betrieb eine Spitzengeschwindigkeit des 1- bis 3-Fachen derjenigen des Außengebläses (207) aufweist, optional des 1,3- bis 2,5-Fachen derjenigen des Außengebläses (207).

11. Turbomaschine nach Anspruch 1, wobei ein überstrichener Bereich des Außengebläses (207) 2- bis 20-mal größer als ein überstrichener Bereich des Innengebläses (206) ist, optional 7,5-bis 13-mal größer als ein überstrichener Bereich des Innengebläses (206).

12. Luftfahrzeug, umfassend eine oder mehrere Turbomaschinen (201) nach einem vorhergehenden Anspruch.

## Revendications

1. Turbomachine à flux axial (102) destinée à produire une poussée pour propulser un aéronef, comprenant :
un conduit interne (202) et un conduit externe (204) qui sont tous deux annulaires et concentriques l'un par rapport à l'autre ;
une soufflante interne (206) située dans le conduit interne (202), la soufflante interne (206) étant conçue pour produire un flux sous pression primaire ;
une soufflante externe (207) située dans le conduit externe (204), la soufflante externe (207) étant conçue pour produire un flux sous pression secondaire et possédant un moyeu creux (208) à travers lequel passe le conduit interne (202) ;
les soufflantes interne et externe (206, 207) étant chacune conçues pour produire une poussée pour propulser l'aéronef ;
ladite soufflante interne (206) possédant, lors du fonctionnement, une vitesse de rotation de 3 à 8 fois celle de la soufflante externe (207) ; et
lors du fonctionnement, ledit flux sous pression primaire et ledit flux sous pression secondaire sortant de leurs conduits respectifs (204, 206), après quoi le flux sous pression secondaire enveloppe sensiblement le flux sous pression primaire et un bord de fuite du conduit externe étant situé axialement en aval du conduit interne (202) pour le mélange des flux sous pression primaire et secondaire.

2. Turbomachine selon la revendication 1, dans laquelle la soufflante interne (206) possède, lors du fonctionnement, une vitesse de rotation de 5 à 7 fois celle de la soufflante externe (207), éventuellement 6 fois celle de la soufflante externe (207).

3. Turbomachine selon la revendication 1, dans laquelle la soufflante interne (206), lors du fonctionnement, tourne en sens inverse de la soufflante externe (207).

4. Turbomachine selon la revendication 1, dans laquelle la soufflante interne (206) et la soufflante externe (207) sont chacune entraînées par une machine électrique (209, 210, 211, 212).

5. Turbomachine selon la revendication 1, comprenant en outre une première machine électrique (209, 210) conçue pour entraîner la soufflante interne (206), la première machine électrique (209, 210) possédant un rotor (209) solidaire d'un moyeu de la soufflante interne (206) et un stator (210) situé radialement vers l'intérieur du rotor (209).

6. Turbomachine selon la revendication 1, dans laquelle une seconde machine électrique (211, 212) est conçue pour entraîner la soufflante externe (207), la seconde machine électrique (211, 212) possédant un rotor (211) solidaire du moyeu de la soufflante externe (207) et un stator (212) situé radialement vers l'intérieur du rotor (211) et radialement vers l'extérieur du conduit interne (202).

7. Turbomachine selon la revendication 1, dans laquelle la soufflante interne (206) et la soufflante externe (207) se chevauchent partiellement ou totalement dans une direction axiale.

8. Turbomachine selon la revendication 1, dans laquelle un rapport moyeu-pointe de la soufflante externe (207) est de 1,6 à 2,2 fois un rapport moyeu-pointe de la soufflante interne (206), éventuellement de 1,6 à 2,0 fois le rapport moyeu-pointe de la soufflante interne (206), éventuellement de 1,6 à 1,8 fois le rapport moyeu-pointe de la soufflante interne (206), et éventuellement la soufflante externe (207) possède un rapport moyeu-pointe de 0,4 et la soufflante interne (206) possède un rapport moyeu-pointe de 0,25.

9. Turbomachine selon la revendication 1, dans laquelle la soufflante externe (207) possède un diamètre allant de 2,5 à 3,5 fois un diamètre de la soufflante interne (206), éventuellement allant de 2,8 à 3,3 fois un diamètre de la soufflante interne (206).

10. Turbomachine selon la revendication 1, dans laquelle la soufflante interne (206) possède, lors du fonctionnement, une vitesse de pointe de 1 à 3 fois celle de la soufflante externe (207), éventuellement de 1,3 à 2,5 fois celle de la soufflante externe (207).

11. Turbomachine selon la revendication 1, dans laquelle une surface balayée de la soufflante externe (207) est de 2 à 20 fois supérieure à une surface balayée de la soufflante interne (206), éventuellement de 7,5 à 13 fois supérieure à une surface balayée de la soufflante interne (206).

12. Aéronef comprenant une ou plusieurs turbomachines (201) selon une quelconque revendication précédente.
